# EUROPEAN PATENT APPLICATION

(11) **EP 1 921 002 A2**
(43) Date of publication of application: **14.05.2008**
(21) Application number: 07075959.2
(22) Date of filing: 06.11.2007
(51) Int. Cl.: B62J 15/00

(54) **Cycle mudguard and combination of cycle mudguard and dress guard**

(30) Priority: 07.11.2006 NL 1032821
(71) Applicant: De Woerd B.V., 3771 VG Barneveld (NL)
(72) Inventor: Bos, Robin, 3961 CG Wijk bij Duurstede (NL)
(74) Representative: Blokhuis, Sophia Elisabeth Dionysia

(57) **Abstract**

A cycle mudguard with a plastic shielding element which in use shields a wheel of the cycle over a circumferential angle thereof, which mudguard can be fixed on a part of the frame of the cycle, the shielding element comprising a central part, and an additional part of the plastic shielding element being fitted on both axial ends of the central part, which central part and additional parts are manufactured separately and then fitted.

Furthermore, the cycle mudguard preferably has an elongated reinforcing element which reinforces the plastic shielding element and extends in the circumferential direction.

## Description

A first aspect of the present invention relates to a cycle mudguard for fixing on a frame of a cycle or other two-wheeled vehicle such as, for example, a moped, motorcycle etc.

Plastic cycle mudguards are known in many forms in the prior art.

GB 820 973 discloses a cycle mudguard with an extruded or injection moulded plastic shielding element. The shielding element is mirror symmetrical in shape in the median longitudinal plane and has two centrally situated slots. A reinforcing element is placed in the slots of the shielding element, so that a shape-retaining cycle mudguard is formed. The reinforcing element is elongated and extends in the circumferential direction of the cycle mudguard. The reinforcing element is designed so as to be V-shaped in cross section. When the reinforcing element is placed in the slots of the shielding element a cavity remains between the shielding element and the reinforcing element, which cavity can be used to pass through items, for example electrical cables for the lighting.

The first aspect of the invention aims to propose improvements in the field of plastic cycle mudguards.

One of the further aims of the first aspect of the invention is to propose improvements which lead to rigid "plastic" mudguards which can be fitted easily and reliably in the industry on a part of the cycle frame.

Another further aim of the first aspect of the invention is to propose measures which enable an improved fixing of a plastic mudguard on the frame.

Another further aim of the first aspect of the invention is to provide a mudguard with plastic shielding element which combines rigidity with low susceptibility to permanent deformation during practical daily use of the cycle.

Another further aim of the first aspect of the invention is to propose a system with a front mudguard and a rear mudguard for a cycle which is attractive logistically and in terms of production.

In order to achieve one or more of the abovementioned aims, the first aspect of the invention proposes a number of measures which can be achieved in various combinations or otherwise.

A first aspect of the invention provides a cycle mudguard such as that defined in claim 1, in which the reinforcing element is shorter than the shielding element in the circumferential direction. The reinforcing element therefore does not extend along the full length of the shielding element, which means that the cycle mudguard is not reinforced along its full length.

The plastic shielding element can be in one piece, but it can also be composed of a number of parts, both in the circumferential direction (for example with a central part in which the reinforcing element is accommodated and an additional part on one axial end or on both axial ends of said central part) and/or in the widthwise direction of the shielding element (for example with two halves).

The reinforcing element preferably extends over at least 30%, particularly preferably at least 50%, of the circumferential angle of the shielding element. With the reinforcing element being of a relatively short design, the mudguard will be relatively flexible over a considerable part, which can be advantageous, for example for a mountain bike. For an "ordinary town bike" it will be preferable to make the reinforcing element longer, in order to prevent vibration and rattling.

In an embodiment which is advantageous in practice the reinforcing element extends over a considerable circumferential angle, preferably between 60° and 100°, particularly preferably around 90°, so that the cycle mudguard is sufficiently rigid to prevent rattling. In general, it is preferable to make the reinforcing element in the front mudguard longer than that in the rear mudguard, in particular if the rear mudguard is also fixed near the bracket of the frame, so that said rear mudguard is fixed better than the front mudguard.

For a rear mudguard with a circumferential angle of between 140 and 170° it is preferable for the reinforcing element to extend over an angle of between 60 and 120°.

For a front mudguard with a circumferential angle of between 90 and 120° it is preferable for the reinforcing element to extend over an angle of between 60 and a maximum of 15° less than the circumferential angle of the front mudguard.

The reinforcing element is preferably an elongated section, preferably of metal, particularly preferably of aluminium, such as in particular an extruded aluminium section. Such aluminium sections are commercially available in all kinds of forms suitable for deformation to the necessary arched shape, and capable of withstanding use in a mudguard.

As an alternative, it is possible to use, for example, a section of fibre-reinforced (glassfibre-reinforced) plastic material.

The reinforcing element preferably forms part of a fixing provision for fixing the mudguard on the frame. In this way the reinforcing element provides rigidity on the shielding element, on the one hand, but it also enables sturdy fitting of the mudguard on the frame.

In a preferred embodiment at least one axial end of the cycle mudguard is kept relatively flexible because of the absence of the reinforcing element at that point. This reduces the risk of permanent damage to the cycle mudguard. Free ends of a cycle mudguard (the rear end in the case of a rear mudguard, and both ends in the case of a front mudguard) in particular have been found to be susceptible to damage. If, for example, one end of the cycle mudguard accidentally bumps against a hard object, the flexible end will absorb the impact.

Suitable selection of the length of the reinforcing element will ensure that material can be saved compared with a reinforcing element along the full length. This can also be advantageous for the cost, since the material that is used for the reinforcing element, for example extruded aluminium section, is generally more expensive than the plastic material used for the shielding element.

In addition, it is advantageous that, because of the shorter reinforcing element, the cycle mudguard according to the invention can be made relatively light. This is a major advantage in particular if the cycle mudguard is being used on sports cycles.

Cycle mudguards are generally supplied as a rear mudguard and as a front mudguard. In order to be able to simplify the logistics inside the cycle mudguards factory, the models of the reinforcing elements for the front mudguard and the rear mudguard are preferably substantially identical. The reinforcing elements for the rear mudguards and the front mudguards therefore do not differ from each other and are all of the same length. The reinforcing elements for both the rear mudguard and the front mudguard preferably extend over a circumferential angle of substantially 90°.

In a preferred embodiment the shielding element composed of one or more parts is detachable from the reinforcing element. This feature means that the cycle mudguard is modular in construction. The base of the cycle mudguard is formed by the reinforcing element, which can be fixed on a frame of a bicycle, scooter or motorcycle. The shielding element or the parts of said shielding element can then be fixed to the reinforcing element and/or to each other, for example by means of a snap connection.

Since the reinforcing element forms the basis for all kinds of embodiments of cycle mudguards, fewer parts need to be held in stock at the factory or in the workshop. This gives a logistics advantage.

It is furthermore advantageous that the cycle mudguard can easily be given a different appearance by manually exchanging shielding elements in different colours/shapes.

In a special embodiment of the cycle mudguard according to the invention the reinforcing element is substantially fully enveloped by the shielding element. A number of recesses can be provided at the position of the fixing provision. The advantage of a substantially complete covering of the reinforcing element is that the reinforcing element has little susceptibility to corrosion, weathering or wear.

The reinforcing element is preferably made of anodized aluminium.

In a preferred embodiment the elongated section forming the reinforcing element is tubular with an open or closed circumference, and with a cavity along its length. Such a tubular section, particularly if it has a closed cross section, for example a round or rectangular cross section, gives the cycle mudguard relatively great torsional rigidity with low weight compared with, for example, a reinforcing element in the form of a solid strip.

It is preferable to provide a nut part which is accommodated in the cavity of the elongated section, which nut part is used for fixing therein one or more bolts (preferably two) by means of which the mudguard is fixed to the frame.

If desired, the cavity in the tubular section can be used for passing through items, for example one or more cables or wiring for the lighting. The section may have a number of cavities, in which case one cavity can be used for a nut part, and the other cavity can be used for passing through one or more wires or the like.

A second aspect of the invention relates to the combination of a cycle mudguard and dress guards or similar side guard panels of the cycle wheel (for example of the front wheel, by analogy with the dress guard for shielding the rear wheel, such as if a child seat is being placed near the handlebars).

The current production of cycles in a cycle factory involves in essence a complex assembly process, in which parts from all kinds of suppliers have to be assembled to form a cycle. This assembly is performed largely by hand, given the variation in cycle parts and the complexity of automating that assembly.

It is usual during the assembly for a rear mudguard to be fitted first, and for the dress guards to be fitted subsequently. In order to simplify this part of the assembly, various proposals have been made for a simplified fitting of the dress guard on the mudguard. For instance, it has already been proposed, inter alia, that the dress guard be provided with clips, so that the dress guard can be fixed on the mudguard by a simple snap action.

The known solution for achieving a simplified/quicker assembly of mudguard and dress guards is not satisfactory.

The second aspect of the present invention proposes measures for eliminating or lessening the abovementioned problem.

The second aspect of the invention provides a combination of a mudguard and a pair of dress guards according to claim 12.

The dress guard can be permanently connected to the shielding element (or the part of the shielding element concerned) by, for example, ultrasonic welding. A neat, smooth finish can be obtained by ultrasonic welding, so that hardly any angles or sharp edges in which dirt can accumulate are produced between the shielding element and the dress guard. As an alternative, a glued connection could also be used, but welding is the current preferred method.

In an advantageous embodiment provision is made for the mudguard to be assembled according to a preferred embodiment of the first aspect of the invention with a shielding element made up of two halves and having a reinforcing element. In that embodiment a dress guard can then be integral in each case with the corresponding half of the shielding element of the mudguard. The units then obtained, consisting of dress guard and shielding element half permanently connected to said dress guard, can subsequently be combined to form a unit which is then suitable for assembly of the cycle. For example, each of those units is suitable for fixing by means of a snap connection to the reinforcing element. The snap connection then makes it possible if necessary to replace the dress guard, if the latter is accidentally damaged, with the corresponding half of the shielding element.

A third aspect of the invention is important in particular for the production and logistical side of cycle mudguards. As is known, cycle mudguards are relatively important for the appearance of a cycle, and cycle manufacturers like to have a constant variation in the cycle mudguards, so that they can constantly offer cycles with an attractive appearance.

The third aspect of the invention is based on the insight that the abovementioned requirement cannot be satisfactorily met with the current plastic cycle mudguards.

The third aspect of the invention therefore proposes a cycle mudguard according to claim 14. This produces a cycle mudguard with a plastic shielding element which in use shields a wheel of the cycle over a circumferential angle thereof, which mudguard can be fixed on a part of the frame of the cycle, the mudguard furthermore preferably having an elongated reinforcing element which reinforces the plastic shielding element and extends in the circumferential direction.

According to the third aspect of the invention, provision is made for the shielding element to comprise a central part, which is preferably provided with an elongated reinforcing element such as that described here, and for an additional part of the plastic shielding element to be fitted on both axial ends of the central part, which central part and additional parts are manufactured separately and then fitted.

This produces a "modular construction" of the mudguard, which in principle is more complex than that of existing mudguards, but which has considerable advantages when it comes to a mudguard producer supplying different models of mudguards.

The central part is preferably provided on both of its axial ends with substantially identical connecting means, the additional parts of the cycle mudguard being provided with connecting means which are complementary thereto, for example for providing a snap connection, possibly a permanent snap connection after fitting. Of course, a different connecting technique (welding, gluing, screw etc.) could also be used.

In a practical embodiment the central part extends over a circumferential angle of between 60 and 115°, preferably between 100 and 115°.

In particular, the third aspect of the invention offers the possibility of providing a system of two cycle mudguards, for the front wheel and the rear wheel respectively of a cycle, which cycle mudguards are designed according to the third aspect of the invention, the central parts of the cycle mudguards being substantially identical. In this way the central part can be produced in a large run, for example depending on an order, these central parts are complemented by the additional parts to produce the envisaged front and rear mudguards.

It is conceivable for the central part of the cycle mudguard for the rear wheel furthermore to be provided with dress guards, and the front mudguard could, of course, also be provided with side guards. It will be clear to the person skilled in the art that in this context the second aspect of the invention can be used if desired.

The third aspect of the invention therefore furthermore relates to a method for producing systems of cycle mudguards for the front wheel and rear wheel of cycles, comprising the production of substantially identical central parts for the front and rear mudguard, the production of additional parts of the front mudguard and of the rear mudguard, and the assembly of the front mudguard and the rear mudguard by fixing together the parts concerned.

The various aspects of the invention will be explained in greater detail with reference to the appended drawings, which illustrate a practical embodiment, but must not be seen in a restricting sense. In the drawing:
Fig. 1 shows a diagrammatic side view of a two-wheeled vehicle provided with cycle mudguards;
Fig. 2 shows cross sections of various reinforcing elements;
Figs 3A - 3F show various variants for fixing a shielding element;
Figs 4B1 - 4B3 show embodiments of a support for fixing a cycle mudguard according to the invention;
Figs 5A - 5D show possible variants for fixing the cycle mudguard according to the invention on a frame;
Fig. 6 shows a side view in section of the fixing means according to Figure 5D;
Fig. 7 shows in exploded view the parts of a mudguard according to the invention;
Fig. 8 shows diagrammatically in side view a front mudguard and rear mudguard with dress guard according to the invention.

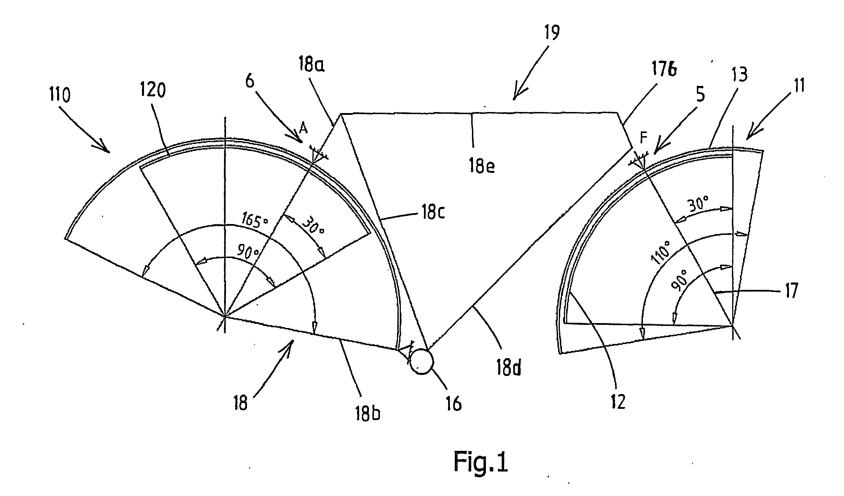

Figure 1 shows a diagrammatic side view of a cycle 1 with a frame. As is known, the frame can be designed in all kinds of ways. In this example the frame has a front fork 17 in which the front wheel (not shown) of the cycle is fixed. The front fork 17 is mounted in a ball and socket mounting head 17b. The frame furthermore has a rear fork 18, in which the rear wheel (not shown in any further detail) of the cycle is fixed. In this example the rear fork has two vertical rear fork tubes 18a and horizontal rear fork tubes 18b, between which the rear wheel is situated. Furthermore, the frame shown by way of example has a seat tube 18c, a bottom bracket bearing bush 16, a bottom tube 18d, and a top tube 18e.

The cycle has a front mudguard 11 at the front wheel and a rear mudguard 110 at the rear wheel.

Both mudguards 11, 110 extend substantially in the form of a circular arc at a distance from the wheel concerned and along a circumferential angle of the wheel concerned.

The front mudguard 11 is fixed on the front fork 17 of the frame at the point where the front mudguard 11 passes between the two fork parts of the front fork (at 5 in Figure 1). In practice, thin supporting stays are also often provided between the wheel axle fixing of the front wheel and the bottom part of the front mudguard.

The rear mudguard 110 is fixed on the rear fork 18, here at a point where the rear mudguard passes between the two vertical rear fork tubes 18a (at 6 in Figure 1). Furthermore, the mudguard 110 is fixed here on the frame 19 near the bottom bracket bearing bush 16.

Each of the mudguards 11, 110 has a "shielding element" composed of one or more parts, indicated by the reference numerals 13, 130 respectively, which element has the function of shielding the corresponding circumferential section of the wheel, for example so that the cyclist is not splashed while riding.

The one or more parts forming the shielding element 13, 130 are made substantially of plastic, for example by injection moulding.

In combination with the shielding element 13, 130, each of the mudguards has a reinforcing element, 12, 120 respectively. An important function of the reinforcing element 12, 120 is to reinforce the shielding element which is made substantially of plastic. Furthermore, the reinforcing elements can form part of the fixing means of the corresponding mudguard on the frame, as will be explained further.

The shielding element 13 of the front mudguard 11 in this example extends over an angle of 110°, while the reinforcing element 12 forms an angle of 90°. Both ends of the reinforcing element 12 here lie at a distance from the adjacent end of the shielding element 13. This means that at both ends a part of the cycle mudguard is not reinforced and is therefore relatively flexible relative to the reinforced part. The flexible part is less susceptible to permanent deformations from, for example, the cycle mudguard bumping against obstacles when the cycle is being put away.

It can be seen that part of the reinforcing element 12 lies in front of the front fork 17 and part of it behind said front fork. As will be explained in greater detail, the fixing (at 6) is achieved with fixing means formed partly by the reinforcing element 12.

The reinforcing element 120 extends over a circumferential angle which in this case lies between 80° and 100°, preferably over an angle of approximately 90°. The greater part, approximately 70° to 80° of the reinforcing element, extends backwards from the vertical rear fork tubes 18a of the frame 19.

In Figure 1 both the rear mudguard and the front mudguard are designed with a reinforcing element extending over approximately 90°, which can produce logistical advantages in the production.

At the rear mudguard the reinforcing element extends only partially between the fixing points for the fixing of the rear fork tubes 18a and the bottom bracket bearing bush 16 respectively. Through the fixing at two points around the circumference, the rear mudguard 130 has in fact sufficient rigidity, so that the reinforcing element is not required at that point.

As Figure 1 shows, the reinforcing elements 12, 120 are substantially shorter than the shielding elements 13, 130. In the case of the front mudguard 11 the reinforcing element 12 covers at most 90% of the total length of the cycle mudguard in the circumferential direction. In the rear mudguard 110 the reinforcing element 120 covers approximately 50% of the total circumferential length of the cycle mudguard 110. Particularly in the case of cycle mudguards with a circumferential angle greater than 90°, a considerable saving of material can be achieved by limiting the length of the reinforcing element to a circumferential angle of at most 90°.

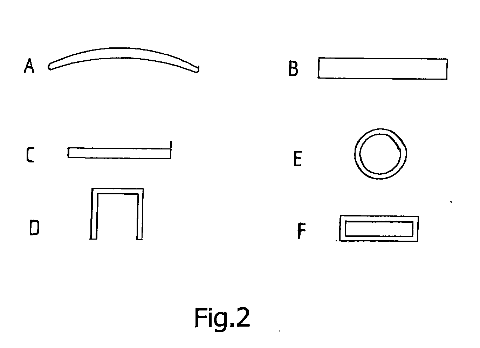

Figure 2 shows diagrammatically cross sections of exemplary embodiments of reinforcing elements which are suitable for use in a cycle mudguard according to the invention.

Embodiments A, B and C are simple embodiments made of elongated solid metal sheet material, preferably aluminium. Embodiment D shows a reinforcing element made of a U-section. A cost saving can be achieved by using standard commercially available sections.

Embodiments E and F show models of the reinforcing element with closed hollow tubular cross sections. With use of, inter alia, the cross sections 5, 6, a cavity is advantageously produced in the circumferential direction in the cycle mudguard according to the invention. The cavity in the cycle mudguard can be used, for example, for passing through wiring for lighting. It is advantageous in the closed tubular embodiments E, F that these reinforcing elements provide a relatively greater torsional rigidity than that of the other embodiments A - D shown. This prevents shuddering or rattling of the cycle mudguard on the conveyance.

In order to obtain a favourable ratio between the weight and the torsional rigidity of the reinforcing element, a tubular section with a maximum wall thickness of 1 mm is preferably used. Moreover, it is advantageous if the section has a flat side wall, like embodiment F in Figure 2, so that this section is easy to fix as a reinforcing element on a frame of a conveyance such as a cycle.

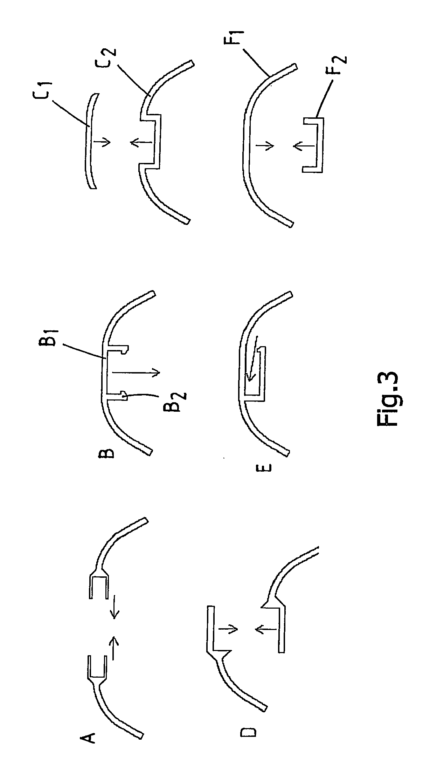

Figure 3 shows diagrammatically various embodiments A - F of the plastic shielding element of the mudguard, with which a reinforcing element (not shown), of a rectangular shape in cross section here, is then combined in each case. There may be a detachable fixing of the one or more parts of a shielding element to a reinforcing element. The one or more parts of the shielding elements can be made of suitable plastic material, for example by injection moulding or extrusion.

Embodiment A shows a shielding element made up of two identical parts or halves, which connect to each other in a longitudinal partial seam of the mudguard. The parts each have on the longitudinal edges which are to be facing each other an open groove into which a part of the reinforcing element fits, in such a way that the reinforcing element ultimately lies in each of the parts and is then preferably shielded fully by the parts concerned. As the arrows indicate, provision is made for the parts to be slid sideways on the reinforcing element. In one possible embodiment these parts of the shielding element can be clamped to form a reliable connection with the reinforcing element. In a variant of embodiment A provision can be made for a snap connection between the parts of the shielding element, on the one hand, and the reinforcing element, on the other hand, and/or a snap connection between the parts of the shielding element, so that the reinforcing element is retained between them. In yet another variant a glued connection is used between the parts and/or the reinforcing element, or in yet another variant the parts of the shielding element are welded together.

Embodiment B shows a shielding element in the case of which the shielding element is clamped or snapped over a reinforcing element (as shown, for example, in Fig. 2, embodiment F). The shielding element B comprises an open groove B1 on the side of the shielding element facing the wheel, in which groove the reinforcing element is placed. In this case said groove B1 is formed between two ribs, between which the reinforcing element fits. A hooked element B2, possibly a hooked edge along the length of the reinforcing element, produces a snap connection, but other solutions are, of course, also conceivable.

Figure 3C shows an alternative embodiment, in which the reinforcing element is completely enclosed by the two parts of which the shielding element is composed. The shielding element C here comprises a part C2 lying along the wheel and having an open groove towards the side facing away from the wheel, in which groove the reinforcing element can be fitted. After placing of the reinforcing element, provision is made here for a cover strip C1 to be fitted over the reinforcing element.

In Figure 3D the shielding element is composed of two halves, each having a horizontal L-shaped wall, so that together they bound a space into which the reinforcing element fits.

In Figure 3E there is an open groove on the side of the one-piece shielding element facing the wheel, which groove has an opening on the side for the insertion of the reinforcing element.

Figure 3F shows a shielding element F1 with the generally known cross-sectional shape of a mudguard (which is substantially an inverted U-shape), having here a separately manufactured second part F2 of the shielding element. The part F2 here has the shape of a channel which is to be fixed (welded or glued) against the side of F1 facing the wheel, said channel having a cavity into which the reinforcing element fits.

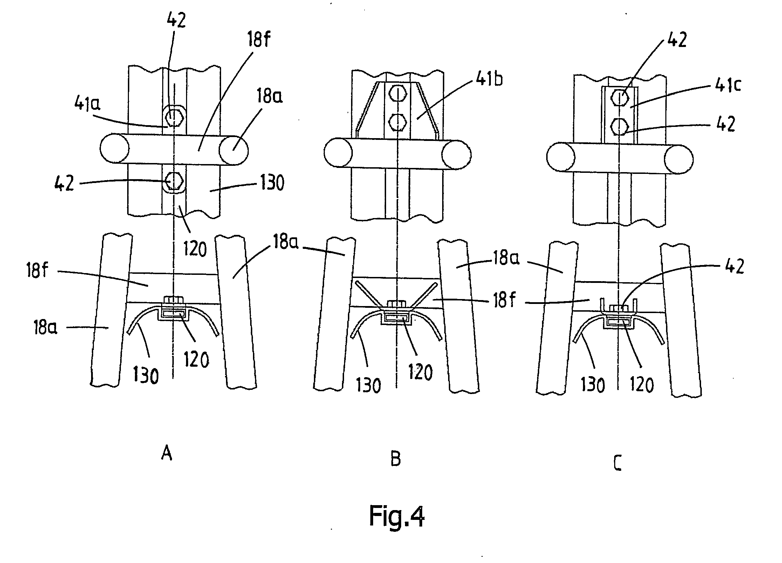

Figure 4 shows various embodiments A - C of supports 41A - 41C, which are welded on a frame of a cycle, here between the rear fork tubes 18a on a bridge part 18f. It will be clear that a similar solution is conceivable in the case of a front fork.

In the solutions shown here provision is made for the support (lacquered metal) 41A - C of the frame to rest directly against the reinforcing element in the mudguard, to which end, if necessary, the part of the reinforcing element concerned is exposed by means of an opening in the plastic shielding element. The direct contact makes a sturdy, play-free fixing possible.

The support can be in the form of a strip as in 41A, but it can also be channel-shaped as in 41 B and 41C. A channel-shaped support provides greater rigidity on the fixing of the cycle mudguard. In the channel-shaped embodiment of 41B the cheeks of the support are positioned at an angle.

As is preferable, the supports 41A - C are provided with two holes for bolts 42, so that a two-point fixing is achieved, which together with the sturdy, direct contact eliminates any play.

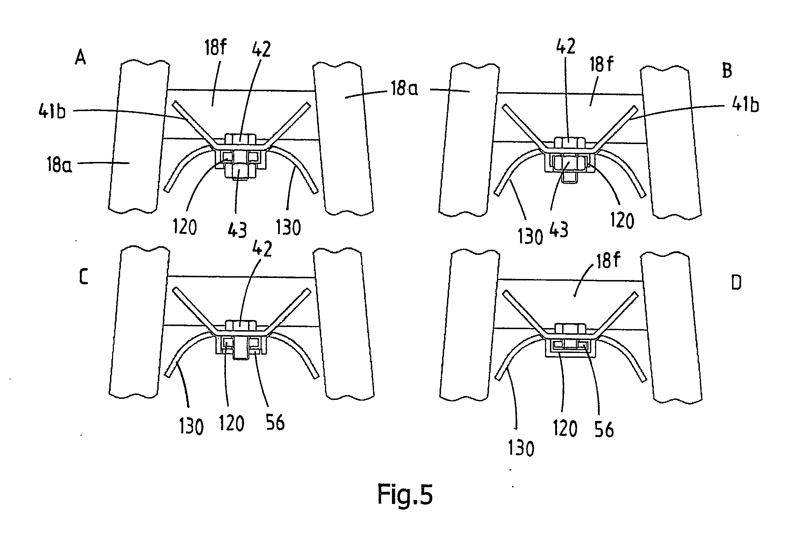

Figure 5 shows various configurations of the way in which a support, here support 41B, can be connected by means of one or more screw bolts to the cycle mudguard, the reinforcing element forming part of the fixing.

In Figure 5A the screwed connection comprises a bolt 42, which projects through a through hole in the reinforcing element 120. A nut 43 is screwed onto the bolt 42, which nut is situated on the side of the reinforcing element 120 facing away from the support. A recess is provided in the shielding element 130 here, in which recess the nut 43 lies, so that the nut also lies directly against the reinforcing element 120.

A fixing similar to that of Figure 5A is shown in Figure 5B, but in this case the nut 43 lies at least partially inside the reinforcing element 120, which is in the form of a U-section here. This means that the construction of the screwed connection is not as high, so that the fixing takes up less space. The nut 43 lies in an open cavity of the reinforcing element, which here has a width equal to the width of the nut 43, so that the nut is secured against turning. If a two-point fixing is provided, the nut could be in the form of a strip with two threaded holes.

In Figure 5C a screwed connection is obtained, use being made of a nut part 56 in the form of a metal strip with one or more threaded holes. In Figure 5C the nut part 56 rests against the side of the reinforcing element facing away from the support 41 B.

In Figure 5D a compact screwed connection is obtained by placing the nut part 56 with one or more threaded holes for the one or more bolts in the cavity of the tubular reinforcing element 120.

It will be clear that in the ways described above by way of example the reinforcing part forms a working part of the fixing of the mudguard to a part of the frame.

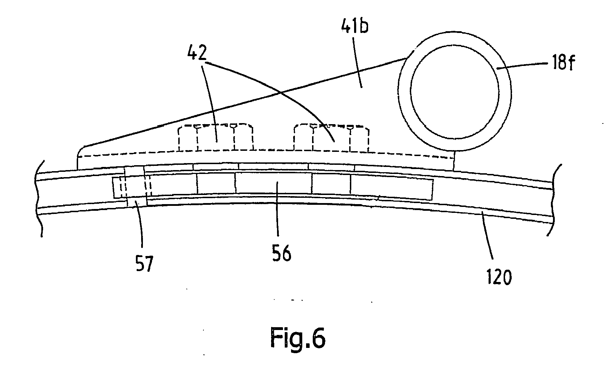

Figure 6 shows a side view of the fixing of a cycle mudguard according to Figure 5D. The tubular reinforcing element 120 with internal cavity 121 can be seen. The nut part 56 is placed in said cavity at the position of the fixing, for two bolts here, as is preferable. A positioning provision, here a pin 57, holds the nut part 56 in position in the cavity.

It can be seen that the support 41 B rests directly against the element 120 and that the bolts 42 are screwed into the nut part 56.

Apart from the embodiments shown in the figures, many variants are possible, all of them falling within the scope of protection as set out in the claims.

In a variant of the embodiment illustrated, the reinforcing element, for example, can be composed of a number of parts. The parts of the reinforcing element can be fitted at suitable points for reinforcement of the cycle mudguard. All kinds of variations of the embodiments of the shielding elements shown are possible, which variations may be provided with a snap connection if desired.

In one variant the reinforcing element can be suitable for welding directly onto the frame of a cycle, in which case the shielding elements can be detachable for maintenance, by means of a snap connection for example.

The invention furthermore provides an embodiment in which dress guards or similar panels for shielding a part of the sides of a wheel are integral with the mudguard. This is designed in particular to achieve a part which can be fitted on the frame as a single unit during the assembly of the cycle.

This integration is preferably achieved by permanently connecting a dress guard to the plastic shielding element, or if said shielding element is composed of two halves (as is preferable), making a dress guard integral with the half concerned in each case. As is the current practice, the dress guard is preferably made of plastic material, and the connection to the part of the shielding element concerned can be achieved by welding, preferably ultrasonic welding.

In one variant the part of the shielding element is injected onto the dress guard, or a two-component injection moulding technique is used. In another variant both dress guards are injection moulded onto a single shielding element.

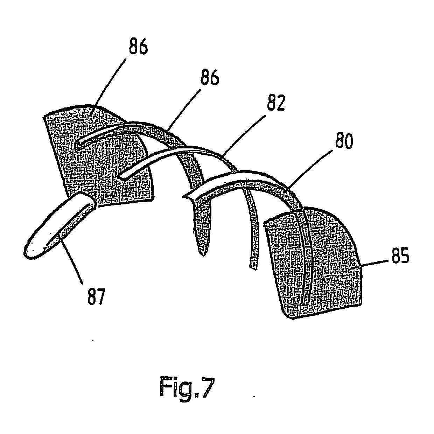

Figure 7 shows diagrammatically the possible parts by means of which the abovementioned approach can be achieved. Two shielding element halves 80, 81, with reinforcing elements 82 to be placed between them, and two dress guards 85, 86 can be seen. A shielding element part 87 can also be seen, fitted as a sort of tail on the rear end of this rear mudguard, and preferably made of relatively impact-proof plastic.

The manner of achievement could then be that the dress guards 85, 86 are injected into a suitable mould made of transparent plastic material. The halves 80, 81 are also injected into a suitable mould. After that, a dress guard and a corresponding half are fixed together by means of welding or gluing, and those units can then be prefabricated with the reinforcing element 82 (and part 87 here) to form a mudguard-dress guard unit. Said unit is then supplied to the assembly line for the cycle.

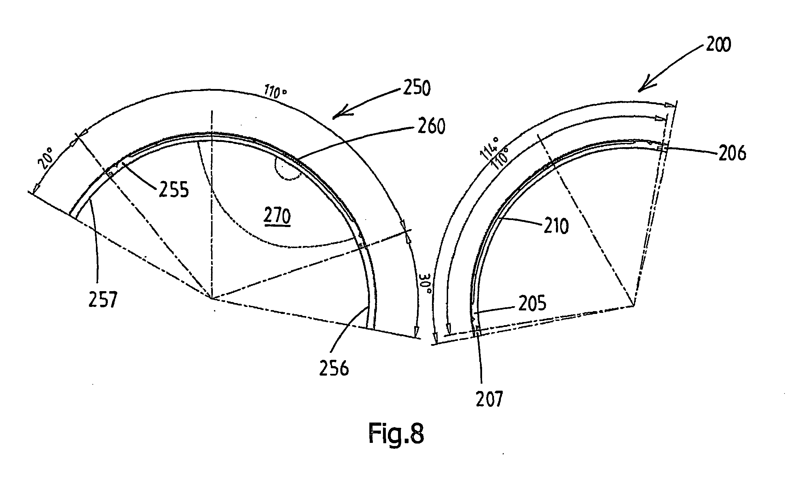

Figure 8 also illustrates the third aspect of the invention. A front mudguard 200 and a rear mudguard 250 for a cycle can be seen. Both mudguards have a plastic shielding element which is composed of a number of parts and in use shields a wheel of the cycle over a circumferential angle thereof. Both mudguards have an elongated reinforcing element, 210, 260 respectively, which reinforces the plastic shielding element composed of parts, and forms part of the fixing to the frame.

The plastic shielding elements of both mudguards have a central part 205, 255, which is provided with the elongated reinforcing element 210, 260.

As is preferable, the two central parts 205, 255 with the reinforcing elements 210, 260 accommodated in them are identical.

In this example the central part 205, 255 extends over an angle of 110°, the identical reinforcing elements then extending over an angle of 90°.

An additional part 206, 207 respectively of the plastic shielding element is mounted on each axial end of the central part 205 of the mudguard 200. These parts 206, 207 are relatively short here and extend over less than 10°.

An additional part 256 is mounted on the front axial end of the rear mudguard 250, and an additional part 257 of the shielding element is fitted on the rear end. In this example the part 256 is designed for fitting the rear mudguard on the frame near bottom bracket bearing bush 16. For that fixing the presence of a reinforcing element is not required. The rear part 257 can, for example, be provided with a reflector and/or lighting, possibly integral with the part 257.

The identical central parts 205, 255 are preferably provided on both of their axial ends with substantially identical connecting means, the additional parts being provided with connecting means which are complementary to them, for example for providing a snap connection.

It will be clear to the person skilled in the art that the construction shown, and then preferably with identical central parts 205, 250, offers great logistical advantages and advantages in terms of production. The central part (preferably with reinforcing element and possibly with a shielding element made up of two halves) can be produced in a large run and held in stock. For example, depending on an order, these central parts can be complemented by the additional parts to produce the envisaged front and rear mudguards. In this case the preferably relatively small additional parts can be produced in an attractive manner (no large moulds) and the requirements of the cycle trade for different models can therefore be met more easily. Moreover, in this way a single central part can be combined with all kinds of different frames, again by combining the central part with additional parts more or less specifically adapted to the frame.

It can be seen in Figure 8 that the central part of the cycle mudguard for the rear wheel is furthermore provided with dress guards 270, and the front mudguard could, of course, also be provided with side guards. It will be clear to the person skilled in the art that in this context use can be made of the second aspect of the invention if desired.

It will be clear to the person skilled in the art that the third aspect of the invention can also be achieved if the central part does not have a reinforcing element, but the central part is, for example, of relatively thick-walled plastic and consequently has sufficient rigidity.

It will be clear to the person skilled in the art that the reinforcing element in the mudguard preferably in each case is used at a point for the "main fixing" on the frame. If desired, said reinforcing element can also serve as a second fixing on the frame, for example at the front mudguard. The reinforcing element could also be used for fitting a lamp, reflector or the like on the mudguard.

## Claims

1. Cycle mudguard with a plastic shielding element which in use shields a wheel of the cycle over a circumferential angle thereof, which mudguard can be fixed on a part of the frame of the cycle, **characterized in that** the shielding element comprises a central part, and **in that** an additional part of the plastic shielding element is fitted on both axial ends of the central part, which central part and additional parts are produced separately and then fitted.

2. Cycle mudguard according to claim 1, in which the mudguard furthermore comprises an elongated reinforcing element which reinforces the plastic shielding element and extends in the circumferential direction.

3. Cycle mudguard according to one of the preceding claims, in which the central part is provided on both axial ends with substantially identical connecting means, and in which the additional parts of the cycle mudguard are provided with connecting means which are complementary thereto, for example for providing a snap connection, possibly a permanent snap connection after fitting.

4. Cycle mudguard according to one of the preceding claims, in which the central part extends over a circumferential angle of between 60° and 115°, preferably between 100° and 115°.

5. Cycle mudguard according to one of the preceding claims, in which the central part is divided in the longitudinal direction, a shielding element half being present on the left side and on the right side of said division.

6. Cycle mudguard according to claim 5, in which each shielding element half is integral with a plastic dress guard.

7. System of two cycle mudguards for the front wheel and the rear wheel respectively of a cycle, which cycle mudguards are each designed according to one or more of the preceding claims, and in which the central parts of the cycle mudguards are substantially identical.

8. System according to claim 7, in which the central part of the cycle mudguard for the rear wheel is further provided with dress guards.

9. Method for producing systems of cycle mudguards for the front wheel and rear wheel of cycles according to claim 6 or 7, comprising the production of substantially identical central parts, the production of additional parts of the front mudguard and of the rear mudguard, and the assembly of the front mudguard and the rear mudguard by fixing together the parts.

10. Cycle mudguard with a plastic shielding element which in use shields a wheel of the cycle over a circumferential angle thereof, which mudguard can be fixed on a part of the frame of the cycle, the mudguard furthermore having an elongated reinforcing element which reinforces the plastic shielding element and extends in the circumferential direction, **characterized in that** the reinforcing element is shorter than the shielding element in the circumferential direction.

11. Cycle mudguard according to claim 2 and/or claim 10, in which the reinforcing element extends over at least 30%, particularly preferably at least 50%, of the circumferential angle of the shielding element concerned.

12. Cycle mudguard according to one or more of claims 2 and/or 10 - 11, in which the reinforcing element extends over a circumferential angle of between 80° and 100°, preferably around 90°.

13. Cycle mudguard according to one or more of claims 2 and/or 10 - 12, in which the reinforcing element is an elongated section, preferably a metal section, particularly preferably an extruded aluminium section.

14. Cycle mudguard according to one or more of claims 2 and/or 10 - 13, in which the mudguard is provided with a fixing provision for fixing the mudguard on the frame, and in which the reinforcing element forms part of the fixing provision.

15. Cycle mudguard according to one or more of claims 2 and/or 10 - 14, in which the shielding element is detachable from the reinforcing element.

16. Cycle mudguard according to one or more of claims 2 and/or 10 - 15, in which the reinforcing element is substantially fully enveloped by the shielding element.

17. Cycle mudguard according to claim 13, in which the reinforcing element is an elongated section with a cavity in its longitudinal direction, preferably a tubular section with a closed circumference.

18. Cycle mudguard according to claim 17, in which a part of the fixing provision is fitted in the cavity of the tubular section, for example a nut part with one or more threaded holes for fixing bolts.

19. Cycle mudguard according to one or more of claims 2 and/or 10 - 18, in which the shielding element has two parts between which the reinforcing element lies, which parts may possibly connect to each other in such a way that the reinforcing element is covered by said parts.

20. Cycle mudguard according to claim 19, in which the parts of the shielding element are connected to each other and/or to the reinforcing element by means of a snap connection.

21. In combination a cycle mudguard with a plastic shielding element which in use shields a wheel of the cycle over a circumferential angle thereof, which mudguard can be fixed on a part of the frame of the cycle, for example a cycle mudguard according to one or more of claims 1 - 6 and/or 10 - 20, and a pair of plastic dress guards or the like for shielding a part of the sides of the wheel of the cycle, **characterized in that** the dress guards are permanently integrated with the mudguard to form a part which can be used as a unit during the assembly of the cycle.

22. Combination according to claim 21, in which the dress guards and the mudguard are manufactured separately and fixed together by means of welding, for example ultrasonic welding.

23. Cycle provided with a cycle mudguard and/or combination according to one or more of the preceding claims.
